# EUROPEAN PATENT APPLICATION

(11) **EP 4 723 246 A1**
(43) Date of publication of application: **08.04.2026**
(21) Application number: 25206129.6
(22) Date of filing: 01.10.2025
(51) Int. Cl.: H01M 4/62, C08G 18/00, H01M 10/052

(54) **DRY BINDER, AND ELECTRODE AND RECHARGEABLE LITHIUM BATTERY INCLUDING THE SAME**

(30) Priority: 07.10.2024 KR 20240135944; 25.09.2025 KR 20250139310
(71) Applicant: SAMSUNG SDI CO., LTD., Yongin-si, Gyeonggi-do 17084 (KR)
(72) Inventor: CHOI, Kyubuem, Yongin-si, Gyeonggi-do 17084 (KR); JUNG, Jiyoon, Yongin-si, Gyeonggi-do 17084 (KR); HONG, Minyoung, Yongin-si, Gyeonggi-do 17084 (KR); PARK, Minsu, Yongin-si, Gyeonggi-do 17084 (KR); HAN, Seung-Hun, Yongin-si, Gyeonggi-do 17084 (KR)
(74) Representative: Maiwald GmbH

(57) **Abstract**

Provided are a dry binder including a crosslinking reaction product in which a polyurethane-based polymer is crosslinked by an epoxy crosslinking agent, an electrode including the dry binder, and a rechargeable lithium battery including the dry binder.

## Description

### BACKGROUND

### 1. Field

The present disclosure relates to a dry binder, an electrode including the dry binder, and a rechargeable lithium battery including the dry binder.

### 2. Description of the Related Art

With increasing presence of electronic devices that use batteries, such as, e.g., mobile phones, laptop computers, electric vehicles, and the like, the demand for small, lightweight, and relatively high-capacity rechargeable batteries is increasing. In particular, rechargeable lithium batteries may be advantageous as a power source for portable devices because they are lightweight and have high energy density.

Rechargeable lithium batteries include a positive electrode and a negative electrode including an active material capable of intercalating and deintercalating lithium ions, and an electrolyte solution, and electrical energy is produced through oxidation and reduction reactions when lithium ions are intercalated and deintercalated from the positive electrode and negative electrode.

Transition metal compounds such as, e.g., lithium cobalt-based oxide, lithium nickel-based oxide, and lithium manganese-based oxide, are mainly used as positive electrode active materials for rechargeable lithium batteries, and crystalline carbon materials such as, e.g., natural graphite or artificial graphite or amorphous carbon materials are used as negative electrode active materials.

Binders are used in various components of these rechargeable lithium batteries. The binder should have high adhesive strength, but binders with high adhesive strength generally may have a disadvantage of increasing resistance.

### SUMMARY

Some example embodiments include a dry binder which has high adhesive strength, is environmentally friendly, and can be utilized in dry processes.

Some example embodiments include an electrode having desired or improved tensile strength and adhesive strength by including the dry binder.

Some example embodiments provide a rechargeable lithium battery having desired or improved cycle-life characteristics by including the dry binder.

In some example embodiments, a dry binder includes a crosslinking reaction product in which a polyurethane-based polymer is crosslinked by an epoxy crosslinking agent.

In some example embodiments, an electrode for a rechargeable lithium battery includes the aforementioned dry binder and an electrode active material.

In some example embodiments, a rechargeable lithium battery includes a positive electrode, a negative electrode, and an electrolyte, wherein at least one of the negative electrode and the positive electrode includes the aforementioned dry binder.

In some example embodiments, a method for manufacturing an electrode includes dry mixing an electrode active material, a binder, and a conductive material to prepare a composition for forming an electrode, and coating the composition for forming the electrode on an electrode current collector to form an electrode. The binder includes a crosslinking reaction product in which a polyurethane-based polymer is crosslinked by an epoxy crosslinking agent.

The dry binder is environmentally friendly because the dry binder does not use fluorine in the dry electrode manufacturing process, and can improve tensile strength and adhesive strength. By including the dry binder, an electrode having desired or improved tensile strength and adhesive strength, and a rechargeable lithium battery having desired or improved cycle-life characteristics, can be provided.

### BRIEF DESCRIPTION OF THE DRAWINGS

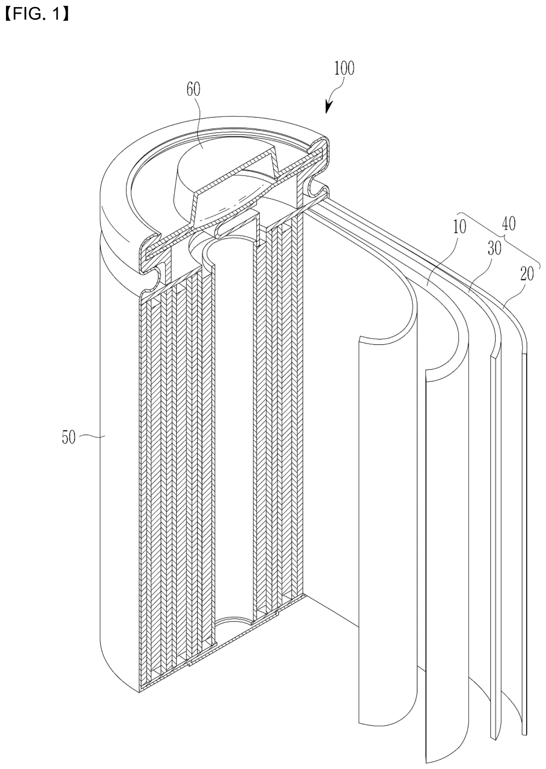

FIGS. 1 to 4 are views schematically illustrating a rechargeable lithium battery according to some example embodiments.

### DETAILED DESCRIPTION

Hereinafter, example embodiments are described in detail so that those of ordinary skill in the art can readily implement them. However, this disclosure may be embodied in many different forms and is not construed as limited to the example embodiments set forth herein.

The terminology used herein is used to describe example embodiments only, and is not intended to limit the present disclosure. The singular expression includes the plural expression unless the context clearly dictates otherwise.

As used herein, "combination thereof" means a mixture, a laminate, a composite, a copolymer, an alloy, a blend, a reaction product, and the like of the constituents.

Herein, it should be understood that terms such as "comprises," "includes," or "have" are intended to designate the presence of an embodied feature, number, step, element, or a combination thereof, but does not preclude the possibility of the presence or addition of one or more other features, number, step, element, or a combination thereof.

In the drawings, the thickness of layers, films, panels, regions, and the like, are exaggerated for clarity, and like reference numerals designate like elements throughout the specification. It is understood that when an element such as a layer, film, region, or substrate is referred to as being "on" another element, the element can be directly on the other element, or intervening elements may also be present there between. In contrast, when an element is referred to as being "directly on" another element, there are no intervening elements present.

In addition, "layer" herein includes not only a shape formed on the whole surface when viewed from a plan view, but also a shape formed on a partial surface.

The average particle diameter may be measured by a method known to those skilled in the art, for example, by a particle size analyzer, or by a transmission electron microscope image or a scanning electron microscope image. Alternatively, it is possible to obtain an average particle diameter value by measuring using a dynamic light scattering method, performing data analysis, counting the number of particles for each particle size range, and calculating from this. Unless otherwise defined, the average particle diameter may indicate the diameter (D₅₀) of particles having a cumulative volume of 50 volume% in the particle size distribution. As used herein, when a definition is not otherwise provided, the average particle diameter indicates a diameter (D₅₀) of particles having a cumulative volume of 50 volume% in the particle size distribution that is obtained by measuring the size (diameter or major axis length) of about 20 particles at random in a scanning electron microscope image.

Herein, "or" is not to be construed as an exclusive meaning, for example, "A or B" is construed to include A, B, A+B, and the like.

Herein, "dry binder" indicates a binder that can manufacture an electrode in a dry manner without using a solvent. For example, "dry binder" refers to a binder used in a dry electrode in which an active material, a dry binder, and optionally a conductive material are mixed without a solvent to prepare an active material layer composition, and an electrode is prepared using the composition.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

### Dry Binder

In some example embodiments, a dry binder includes a crosslinking reaction product in which a polyurethane-based polymer is crosslinked by an epoxy crosslinking agent.

The dry binder attaches electrode active material particles to each other, and attaches the active material to the current collector. Research has been performed on developing environmentally friendly and manufacturing-efficient dry electrode manufacturing processes. Fluorine-based binders such as, e.g., polytetrafluoroethylene (PTFE), may be used as dry binders. However, due to recent environmental issues, it may be advantageous to replace fluorine-based binders such as PTFE with more environmentally friendly materials.

Accordingly, research is being conducted on binders that do not contain fluorine atoms. However, most binders that do not contain fluorine atoms typically have poor adhesive properties, and thus do not reach the level of adhesiveness of PTFE.

Therefore, a dry binder that has desired or improved adhesive properties and that can improve battery performance as an alternative material to fluorine-based binders such as PTFE may be advantageous.

Accordingly, in some example embodiments, a dry binder capable of improving the performance of a battery is provided by introducing a binder having improved adhesive properties, electrolyte solution stability, and current density, and the like, into an electrode without containing fluorine atoms.

In some example embodiments, the polyurethane-based polymer may include a structural unit represented by Chemical Formula 1.

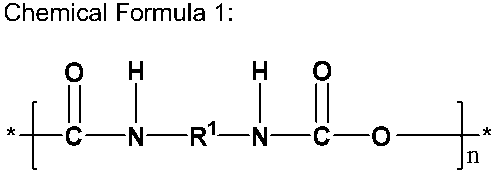

In Chemical Formula 1,

R¹ is a linking group which is independently a substituted or unsubstituted C1 to C20 alkylene group, a substituted or unsubstituted C3 to C20 cycloalkylene group, or a combination thereof, n is an integer in a range of 1 to 300, and * represents a linking site with a main chain.

The substituted or unsubstituted C1 to C20 alkylene group may include a structural unit of -(CH₂)ₙ-, wherein n is an integer in a range of 1 to 14.

At least one non-adjacent methylene group (-(CH₂)-) among linking groups may be replaced with at least one of -NH-, -C(=O)-, or a combination thereof.

In some example embodiments, the polyurethane-based polymer may further include at least one of ether group-containing structural units, ester group-containing structural units, or a combination thereof.

The polyurethane-based polymer including the ether group-containing structural unit may include a structural unit represented by Chemical Formula 1-1, the polyurethane-based polymer including the ester group-containing structural unit may include a structural unit represented by Chemical Formula 1-2, and the polyurethane-based polymer including the ether group-containing structural unit and the ester group-containing structural unit may include a structural unit represented by Chemical Formula 1-3.

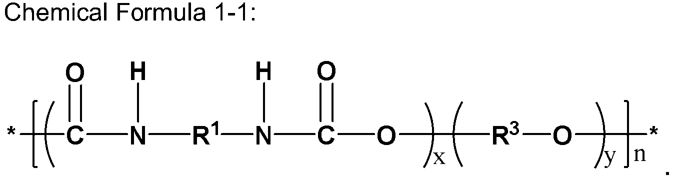

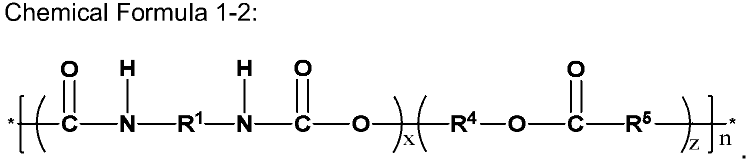

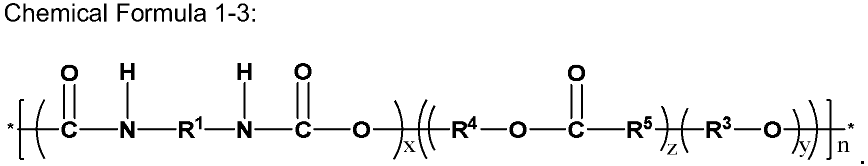

In Chemical Formula 1-1, Chemical Formula 1-2, and Chemical Formula 1-3,

R¹, R³, R⁴, and R⁵ are each independently linking groups which are a substituted or unsubstituted C1 to C20 alkylene group, a substituted or unsubstituted C3 to C20 cycloalkylene group, or a combination thereof, x, y, and z are mole fractions of each structural unit and are each independently in a range of from about 0 to about 1, n is an integer in a range of 1 to about 200, and * represents a linking site with a main chain.

The ether group-containing structural unit, the ester group-containing structural unit, and a combination of both of the ether group-containing structural unit and the ester group-containing structural unit may each be included in an amount in a range of from about 0 mol% to about 70 mol% based on 100 mol% of the polyurethane-based polymer.

The substituted or unsubstituted C1 to C20 alkylene group may include a structural unit of -(CH₂)ₙ-, where n is an integer in a range from 2 to 14.

At least one non-adjacent methylene group (-(CH₂)-) among the linking groups may be replaced with at least one of -NH-, -C(=O)-, or a combination thereof.

In some example embodiments, R¹, R³, R⁴, and R⁵ may include any one of the moieties of Group 1.

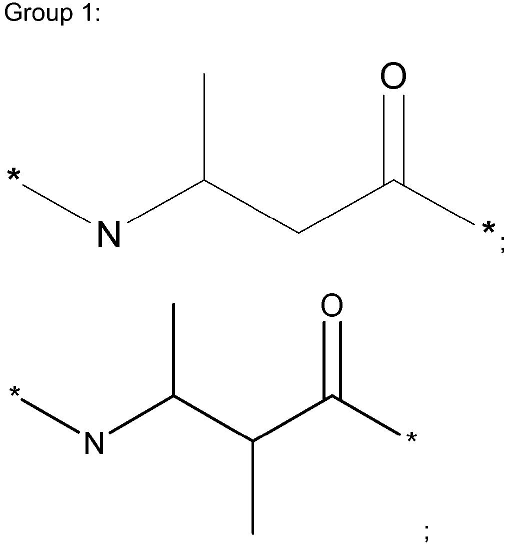

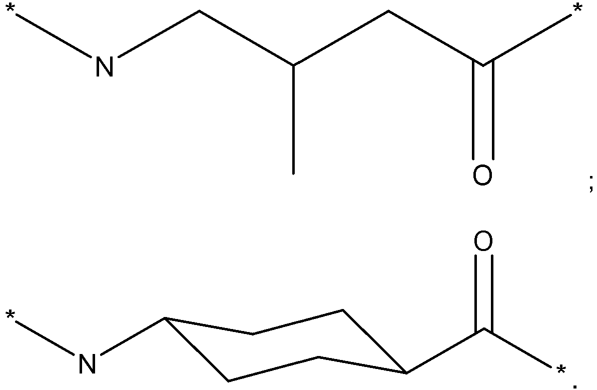

In Group 1, * indicates a linking site with the main chain.

In some example embodiments, the polyurethane-based polymer may be included in an amount in a range of from about 60 parts by weight to about 95 parts by weight, for example, about 70 parts by weight to about 90 parts by weight, based on 100 parts by weight of the dry binder. Within the above range, the electrode manufacturing process using a dry binder is easier, and the adhesive strength of the electrode can be improved.

A weight average molecular weight (Mw) of the polyurethane-based polymer may be in a range of from about 600 g/mol to about 800,000 g/mol. In the above range, the electrode manufacturing process using a dry binder is easier and the adhesive strength of the electrode may be improved.

The epoxy crosslinking agent may include at least one of compounds represented by Chemical Formulas 2-1, 2-2, 2-3, 2-4, and 2-5.

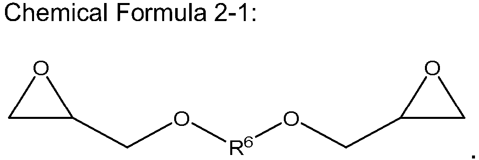

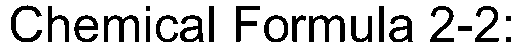

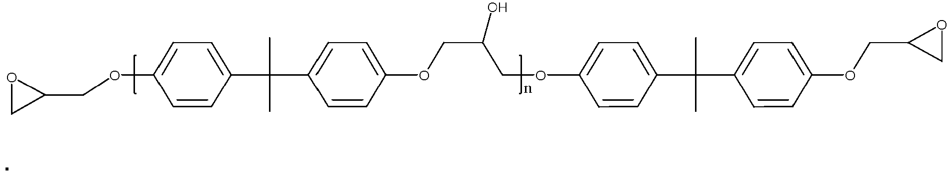

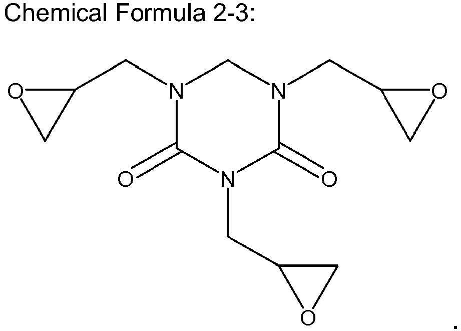

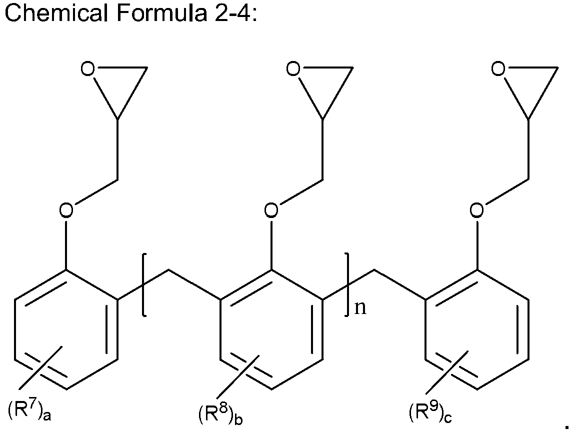

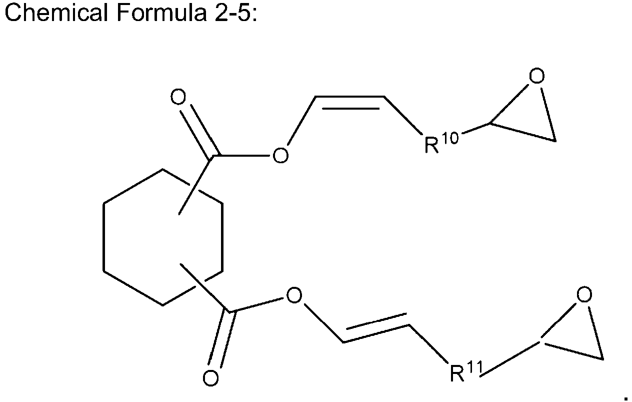

In Chemical Formulas 2-1, 2-2, 2-3, 2-4, and 2-5,

R⁶, R¹⁰, and R¹¹ are each independently a substituted or unsubstituted C1 to C6 alkylene group,

R⁷, R⁸, and R⁹ are the same or different and each independently includes hydrogen (H), deuterium, or a substituted or unsubstituted C1 to C6 alkyl group,

n is an integer greater than or equal to 1 and less than or equal to about 30, and

a, b, and c are each independently integer greater than or equal to 0 and less than or equal to 4.

In some example embodiments, the epoxy crosslinking agent may be included in an amount in a range of from about 5 parts by weight to about 40 parts by weight, for example, about 10 parts by weight to about 30 parts by weight, based on 100 parts by weight of the dry binder. Within the above range, the crosslinking agent can form a crosslinking bond with the polyurethane-based polymer to improve the adhesive strength.

A weight average molecular weight (Mw) of the epoxy crosslinking agent may be in a range of from about 170 g/mol to about 100,000 g/mol, for example, in a range of about 170 g/mol to about 6,000 g/mol. Within the above range, the epoxy crosslinking agent may form a crosslinking bond with the polyurethane-based polymer to improve adhesive strength.

In some example embodiments, the epoxy crosslinking agent may include at least one of ethylene glycol diglycidyl ether, a bisphenol A novolac, a cresol novolac, and a phenol novolac, or a combination thereof.

The dry binder includes the polyurethane-based polymer and epoxy crosslinking agent, and has the effect of improving tensile strength and adhesive strength through crosslinking, so that the polyurethane-based polymer and epoxy crosslinking agent can be usefully used as a dry binder included in positive and negative electrodes for rechargeable lithium batteries.

### Electrode

Some example embodiments include an electrode for a rechargeable lithium battery including a dry binder and an electrode active material according to the aforementioned example embodiments. The dry binder is included in an amount in a range of about 0.5 parts by weight to about 20 parts by weight based on 100 parts by weight of the electrode active material.

The electrode may be manufactured by providing an electrode composition for a rechargeable lithium battery including the dry binder and electrode active material of the aforementioned example embodiment, and coating the electrode composition on a current collector, and compressing the current collector.

The electrode may be a negative electrode or a positive electrode. The dry binder has high adhesive strength and low resistance even when used in a negative electrode that undergoes a large volume change due to charge and discharge of a rechargeable lithium battery, and thus can contribute to improving the performance of a rechargeable lithium battery.

Hereinafter, a positive electrode and a negative electrode for a rechargeable lithium battery according to some example embodiments is described.

### Negative Electrode

The negative electrode includes a current collector, and a negative electrode active material layer on the current collector. The negative electrode active material layer includes a negative electrode active material, and may further include a binder and/or a conductive material. The binder may be or include a dry binder of the aforementioned example embodiments.

For example, the negative electrode active material layer may include about 90 wt% to about 99.5 wt% of the negative electrode active material, about 0.5 wt% to about 5 wt% of the binder, and about 0 wt% to about 5 wt% of the conductive material.

The negative electrode active material may include at least one of a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, SiOₓ (0 < x ≤ 2), a Si-Q alloy (wherein Q is or includes an element such as or including at least one of an alkali metal, an alkaline-earth metal, a Group 13 element, a Group 14 element (excluding Si), a Group 15 element, a Group 16 element, a transition metal, a rare earth element, and a combination thereof), or a combination thereof. The Sn-based negative electrode active material may be or include at least one of Sn, SnO₂, a Sn-based alloy, or a combination thereof.

The silicon-carbon composite may be or include a composite of silicon and amorphous carbon. According to some example embodiments, the silicon-carbon composite may be in the form of silicon particles, and amorphous carbon coated on the surface of the silicon particles. For example, the silicon-carbon composite may include a secondary particle (core) in which silicon primary particles are assembled, and an amorphous carbon coating layer (shell) on the surface of the secondary particle. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles, and an amorphous carbon coating layer on the surface of the core.

The Si-based negative electrode active material or Sn-based negative electrode active material may be mixed with the carbon-based negative electrode active material.

The binder adheres the negative electrode active material particles to each other, and also adheres the negative electrode active material to the current collector. The binder may include an additional binder in addition to the dry binder according to some example embodiments. Examples of the additional binder may include at least one of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinyl pyrrolidone, polyurethane, polyvinylidene fluoride, polyethylene, polypropylene, a styrene-butadiene rubber, a (meth)acrylated styrene-butadiene rubber, an epoxy resin, a (meth)acrylic resin, polyester resin, nylon, and the like, but are not limited thereto.

The conductive material is included to provide electrode conductivity, and any electrically conductive material may be used as a conductive material unless the electrically conductive material causes an adverse chemical change in the battery. Examples of the conductive material include a carbon-based material such as at least one of natural graphite, artificial graphite, carbon black, acetylene black, Ketjen black, a carbon fiber, a carbon nanofiber, a carbon nanotube, and the like; a metal-based material of a metal powder or a metal fiber including at least one of copper, nickel, aluminum, silver, and the like; a conductive polymer such as a polyphenylene derivative; or a mixture thereof.

The negative electrode current collector may include at least one of a copper foil, a nickel foil, a stainless-steel foil, a titanium foil, a nickel foam, a copper foam, a polymer substrate coated with a conductive metal, and a combination thereof.

### Positive Electrode

The positive electrode may include a current collector, and a positive electrode active material layer formed on the current collector. The positive electrode active material layer may include a positive electrode active material, and may further include a binder and/or a conductive material. The binder may be or include the binder of the aforementioned example embodiments.

A content of the positive electrode active material may be in a range of from about 90 wt% to about 99.5 wt% or about 90 wt% to about 99.0 wt% based on 100 wt% of the positive electrode active material layer, and the content of each of the binder and the conductive material may be in a range of from about 0.5 wt% to about 5 wt% based on 100 wt% of the positive electrode active material layer.

The positive electrode active material may be or include a compound (lithiated intercalation compound) capable of intercalating and deintercalating lithium. For example, one or more types of composite oxides of lithium and a metal such as or including at least one of cobalt, manganese, nickel, and combinations thereof, may be used.

The composite oxide may be or include a lithium transition metal composite oxide, and examples thereof may include at least one of a lithium nickel-based oxide, a lithium cobalt-based oxide, a lithium manganese-based oxide, a lithium iron phosphate-based compound, a cobalt-free lithium nickel-manganese-based oxide, or a combination thereof.

As an example, a compound represented by any of the following chemical formulas may be used. LiₐA_{1-b}X_{b}O_{2-c}D_{c} (0.90≤a ≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O₂₋ₐ D ₐ (0.90≤a≤1.8, 0≤b≤0.5, 0≤c≤0.5, 0< a <2); LiₐNi_{1-b-c}Mn_{b}X_{c}O₂₋ₐ D ₐ (0.90≤a≤1.8, 0≤b≤0.5, 0≤c≤0.5, 0< a <2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); LiₐFePO₄ (0.90≤a≤1.8).

In the above chemical formulas, A is or includes at least one of Ni, Co, Mn, or a combination thereof; X is or includes at least one of Al, Ni, Co, Mn, Cr, Fe, Mg, Sr, V, a rare earth element, or a combination thereof; D is or includes at least one of O, F, S, P, or a combination thereof; G is or includes at least one of Al, Cr, Mn, Fe, Mg, La, Ce, Sr, V, or a combination thereof; and L¹ is or includes at least one of Mn, Al, or a combination thereof.

The positive electrode active material may be or include, for example, at least one of a lithium nickel-based oxide represented by Chemical Formula 11, a lithium cobalt-based oxide represented by Chemical Formula 12, a lithium iron phosphate-based compound represented by Chemical Formula 13, a cobalt-free lithium nickel-manganese-based oxide represented by Chemical Formula 14, or a combination thereof.

Chemical Formula 11:

Liₐ₁Niₓ₁M¹_{y1}M²_{z1}O_{2-b1}X_{b1}.

In Chemical Formula 11, 0.9≤a1≤1.8, 0.3≤x1≤1, 0≤y1≤0.7, 0≤z1≤0.7, 0.9≤x1+y1+z1≤1.1, and 0≤b1≤0.1, M¹ and M² each is or includes independently one or more of Al, B, Ba, Ca, Ce, Co, Cr, Cu, Fe, Mg, Mn, Mo, Nb, Si, Sn, Sr, Ti, V, W, and Zr, and X is or includes at least one or more of F, P, and S.

In Chemical Formula 11, 0.6≤x1≤1, 0≤y1≤0.4, and 0≤z1≤0.4, or 0.8≤x1≤1, 0≤y1≤0.2, and 0≤z1≤0.2.

Chemical Formula 12:

Liₐ₂Coₓ₂M³_{y2}O_{2-b2}X_{b2}.

In Chemical Formula 12, 0.9≤a2≤1.8, 0.7≤x2≤1, 0≤y2≤0.3, 0.9≤x2+y2≤1.1, and 0≤b2≤0.1, M³ is or includes at least one or more of Al, B, Ba, Ca, Ce, Cr, Cu, Fe, Mg, Mn, Mo, Ni, Se, Si, Sn, Sr, Ti, V, W, Y, Zn, and Zr, and X is or includes at least one or more of F, P, and S.

Chemical Formula 13:

Liₐ₃Feₓ₃M'_{y3}PO_{4-b3}X_{b3}.

In Chemical Formula 13, 0.9≤a3≤1.8, 0.6≤x3≤1, 0≤y3≤0.4, and 0≤b3≤0.1, M⁴ is or includes at least one or more of Al, B, Ba, Ca, Ce, Co, Cr, Cu, Mg, Mn, Mo, Ni, Se, Si, Sn, Sr, Ti, V, W, Y, Zn, and Zr, and X is or includes at least one or more of F, P, and S.

Chemical Formula 14:

Liₐ₄Niₓ₄Mn_{y4}M⁵_{z4}O_{2-b4}X_{b4}.

In Chemical Formula 14, 0.9≤a4≤1.8, 0.8≤x4<1, 0<y4≤0.2, 0≤z4≤0.2, 0.9≤x4+y4+z4≤1.1, and 0≤b4≤0.1, M⁵ is or includes at least one or more of Al, B, Ba, Ca, Ce, Cr, Fe, Mg, Mo, Nb, Si, Sn, Sr, Ti, V, W, and Zr, and X is or includes at least one or more of F, P, and S.

For example, the positive electrode active material may be or include a high-nickel positive electrode active material in which the nickel content is greater than or equal to about 80 mol%, greater than or equal to about 85 mol%, greater than or equal to about 90 mol%, greater than or equal to about 91 mol%, or greater than or equal to about 94 mol% and less than or equal to about 99 mol%, based on 100 mol% of metal excluding lithium in the lithium transition metal composite oxide. The high-nickel positive electrode active material can achieve high capacity, and can be applied to high-capacity, high-density rechargeable lithium batteries.

The aforementioned dry binder may be used as a positive electrode binder, and other additional binders may be further included. The positive electrode binder improves binding properties of positive electrode active material particles with one another and with a current collector. As such additional binders, any binder commonly used in the art may be used without limitation. Examples of the additional binders may include at least one of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but are not limited thereto.

The conductive material is included to provide electrode conductivity, and any electrically conductive material may be used as a conductive material unless the electrically conductive material causes an adverse chemical change in the battery. Examples of the conductive material may include a carbon-based material such as at least one of natural graphite, artificial graphite, carbon black, acetylene black, Ketjen black, a carbon fiber, a carbon nanofiber, a carbon nanotube, and the like; a metal-based material of a metal powder or a metal fiber including at least one of copper, nickel, aluminum, silver, and the like; a conductive polymer such as a polyphenylene derivative; or a mixture thereof.

The current collector may include Al, but is not limited thereto.

### Electrolyte

The electrolyte for a rechargeable lithium battery may be or include, for example, an electrolyte solution, which may include a non-aqueous organic solvent and a lithium salt.

The non-aqueous organic solvent constitutes a medium for transmitting ions taking part in the electrochemical reaction of a battery. The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like. The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like. The aprotic solvent may include at least one of nitriles such as R-CN (wherein R is a C2 to C20 linear, branched, or cyclic hydrocarbon group, and may include a double bond, an aromatic ring, or an ether group, and the like); amides such as dimethylformamide; dioxolanes such as 1,3-dioxolane, 1,4-dioxolane, and the like; sulfolanes, and the like.

The non-aqueous organic solvent may be used alone, or in combination of two or more solvents, and when two or more types of solvents are used in combination, a mixing ratio can be appropriately adjusted depending on the intended battery performance, which is widely understood by those working in the relevant field.

When using a carbonate-based solvent, a cyclic carbonate and a chain carbonate may be mixed, and the cyclic carbonate and the chain carbonate may be mixed in a volume ratio in a range of from about 1:1 to about 1:9.

The non-aqueous organic solvent may further include an aromatic hydrocarbon-based organic solvent. For example, the carbonate-based solvent and the aromatic hydrocarbon organic solvent may be mixed in a volume ratio in a range of from about 1:1 to about 30:1.

The electrolyte solution may further include at least one of vinylethyl carbonate, vinylene carbonate or ethylene carbonate compounds to improve battery cycle-life.

Representative examples of the ethylene carbonate compound may include at least one of fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a battery, enables an operation of a rechargeable lithium battery, and improves transportation of the lithium ions between positive and negative electrodes. Examples of the lithium salt may include at least one of LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide; LiFSI), LiC₄F₉SO₃, LiN(CₓF₂ₓ₊₁SO₂)(C_{y}F_{2y+1}SO₂) wherein x and y are integers of 1 to 20, lithium trifluoromethane sulfonate, lithium tetrafluoroethane sulfonate, lithium difluoro(oxalato) borate (LiDFOB), lithium difluorobis(oxalato) phosphate (LiDFBOP), and lithium bis(oxalato) borate (LiBOB).

A concentration of lithium salt may be within the range of about 0.1 M to about 2.0 M. When the concentration of lithium salt is within the above range, the electrolyte solution has appropriate ionic conductivity and viscosity, and thus desired or improved performance can be achieved and lithium ions can move effectively.

### Separator

Depending on the type of the rechargeable lithium battery, a separator may be present between the positive electrode and the negative electrode. The separator may include at least one of polyethylene, polypropylene, polyvinylidene fluoride, or a multilayer film of two or more layers thereof, for example, a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof, on one surface, or on both surfaces of the porous substrate.

The porous substrate may be or include a polymer film formed of or including any one polymer such as at least one of polyolefin such as polyethylene and polypropylene, polyester such as polyethylene terephthalate and polybutylene terephthalate, polyacetal, polyamide, polyimide, polycarbonate, polyether ketone, polyarylether ketone, polyether ether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON^{®}, and polytetrafluoroethylene, or a copolymer or mixture of two or more thereof.

The porous substrate may have a thickness in a range of from about 1 µm to about 40 µm, for example, about 1 µm to about 30 µm, about 1 µm to about 20 µm, about 5 µm to about 15 µm, or about 10 µm to about 15 µm.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles such as or including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto. An average particle diameter (D₅₀) of the inorganic particles may be in a range of from about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked together.

The thickness of the coating layer may be in a range of from about 0.5 µm to about 20 µm, for example, about 1 µm to about 10 µm, or about 1 µm to about 5 µm.

### Rechargeable Lithium Battery

The rechargeable lithium battery may be classified into cylindrical, prismatic, pouch, or coin-type batteries, and the like depending on the shape thereof. FIGS. 1 to 4 are schematic views showing the rechargeable lithium battery according to some example embodiments, where FIG. 1 is a cylindrical battery, FIG. 2 is a prismatic battery, and FIGS. 3 and 4 are a pouch-shaped battery.

Referring to FIGS. 1 to 4, a rechargeable lithium battery 100 may include an electrode assembly 40 with a separator 30 interposed between a positive electrode 10 and a negative electrode 20, and a case 50 in which the electrode assembly 40 is built. The positive electrode 10, negative electrode 20, and separator 30 may be impregnated with an electrolyte solution (not shown). A rechargeable lithium battery 100 may include a sealing member 60 that seals a case 50 as shown in FIG. 1.

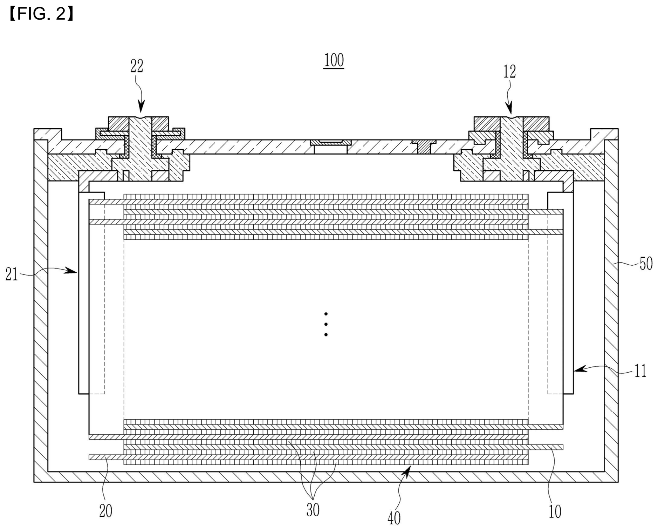

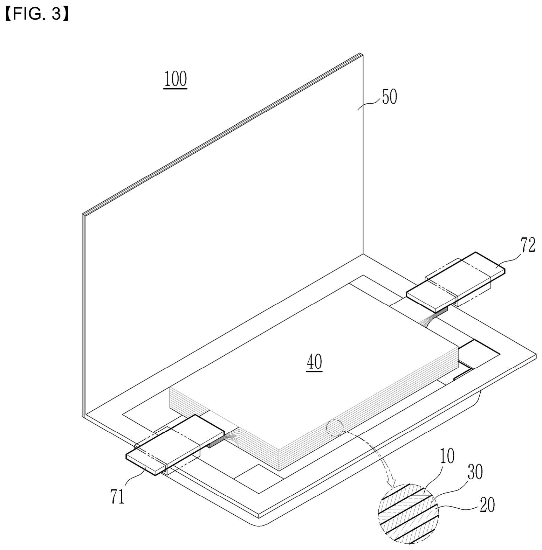

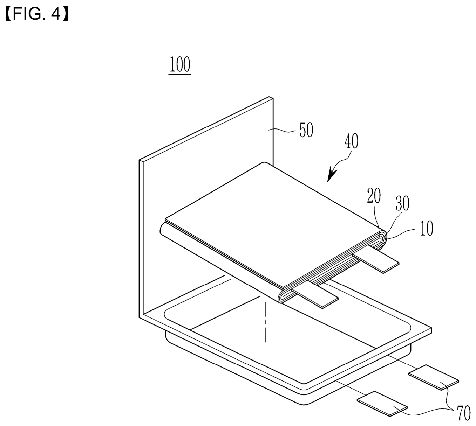

Additionally, in FIG. 2, the rechargeable lithium battery 100 may include a positive electrode lead tab 11, a positive electrode terminal 12 connected to the positive electrode lead tab 11, a negative electrode lead tab 21, and a negative electrode terminal 22 connected to the negative electrode lead tab 21. As shown in FIGS. 3 and 4, a rechargeable lithium battery 100 may include an electrode tab 70 illustrated in FIG. 4, or a positive electrode tab 71 and a negative electrode tab 72 illustrated in FIG. 3, the electrode tabs 70/71/72 forming electrical paths for conducting current formed in an electrode assembly 40 to the outside of the rechargeable lithium battery 100.

Examples and comparative examples of the present disclosure are described below. However, the following examples are only examples of the present disclosure, and the present disclosure is not limited to the following examples.

### Example 1

### Example 1-1: Preparation of Dry Binder

Elastollan^{®} 11 made by BASF as a polyurethane-based polymer including an ether group-containing structural unit and bisphenol-A (EPICLON AM-020-P made by DIC) as a crosslinking agent were mixed in a weight ratio of 7:3 in a Thinky mixer weight at 2000 rpm for 3 minutes to prepare a crosslinked dry binder.

### Example 1-2: Manufacturing of Negative Electrode

After pulverizing the manufactured dry binder, 3 wt% of the dry binder, 95 wt% of artificial graphite as a negative electrode active material, and 2 wt% of carbon black (Super P made by Timcal) as conductive material was mixed, and subjected to a calendaring process at 1 rpm and 180 °C to produce a sheet-shaped negative electrode active material layer. The negative electrode active material layer was compressed and attached onto both sides of a copper current collector at 180 °C to manufacture a negative electrode having a total 250 µm-thick negative electrode active material layer.

### Example 1-3: Manufacturing of Battery Cell

The negative electrode was used with a lithium metal counter electrode and an electrolyte to manufacture a half-cell. The electrolyte was prepared by dissolving 1 M LiPF₆ in a mixed solvent of ethylene carbonate and diethyl carbonate in a volume ratio of 50: 50.

### Example 2

A dry binder, a negative electrode, and a battery cell were manufactured in the same manner as in Example 1, with a difference that Elastollan^{®} 12 made by BASF as a polyurethane-based polymer including an ether group-containing structural unit and bisphenol-A (EPICLON AM-020-P made by DIC) as a crosslinking agent were mixed in a weight ratio of 7:3 to prepare a crosslinked dry binder, and the thickness of the negative electrode active material layer was changed to 180 µm.

### Example 3

A dry binder, a negative electrode, and a battery cell were manufactured in the same manner as in Example 1, with a difference that Elastollan^{®} 800 made by BASF as a polyurethane-based polymer including an ether group-containing structural unit and bisphenol-A (EPICLON AM-020-P made by DIC) as a crosslinking agent were mixed in a weight ratio of 6.5:3.5 to prepare a crosslinked dry binder, and the thickness of the negative electrode active material layer was changed to 200 µm.

### Example 4

A dry binder, a negative electrode, and a battery cell were manufactured in the same manner as in Example 1, with a difference that Elastollan^{®} 800 made by BASF as a polyurethane-based polymer including an ether group-containing structural unit and a phenol novolac-based crosslinking agent (EPICLON N-770 made by DIC) were mixed in a weight ratio of 9:1 to prepare a crosslinked dry binder, and the thickness of the negative electrode active material layer was changed to 180 µm.

### Example 5

A dry binder, a negative electrode, and a battery cell were manufactured in the same manner as in Example 1, with a difference that Elastollan^{®} 800 made by BASF as a polyurethane-based polymer including an ether group-containing structural unit and a cresol novolac-based crosslinking agent (EPICLON N-665 made by DIC) were mixed in a weight ratio of 8:2 to prepare a crosslinked dry binder, and the thickness of the negative electrode active material layer was changed to 220 µm.

### Example 6

A dry binder, a negative electrode, and a battery cell were manufactured in the same manner as in Example 1, with a difference that Elastollan^{®} 12 made by BASF as a polyurethane-based polymer including an ether group-containing structural unit and a phenol novolac-based crosslinking agent (EPICLON N-770 made by DIC) were mixed in a weight ratio of 9:1 to prepare a crosslinked dry binder, and the thickness of the negative electrode active material layer was changed to 230 µm.

### Example 7

A dry binder, a negative electrode, and a battery cell were manufactured in the same manner as in Example 1, with a difference that Elastollan^{®} 11 made by BASF as a polyurethane-based polymer including an ether group-containing structural unit and a cresol novolac-based crosslinking agent (EPICLON N-665 made by DIC) were mixed in a weight ratio of 8:2 to prepare a crosslinked dry binder, and the thickness of the negative electrode active material layer was changed to 200 µm.

### Example 8

A dry binder, a negative electrode, and a battery cell were manufactured in the same manner as in Example 1, with a difference that Elastollan^{®} 11 made by BASF as a polyurethane-based polymer including an ether group-containing structural unit and ethylene glycol diglycidyl ether (Sigma Aldrich Co., Ltd.) as crosslinking agent were mixed in a weight ratio of 9:1 to prepare a crosslinked dry binder, and the thickness of the negative electrode active material layer was changed to 260 µm.

### Comparative Example 1

A dry binder, a negative electrode, and a battery cell were manufactured in the same manner as in Example 1, with a difference that Elastollan^{®} 11 made by BASF as a polyurethane-based polymer including an ether group-containing structural unit alone was used to prepare the dry binder, and the thickness of the negative electrode active material layer was changed to 150 µm.

### Comparative Example 2

A dry binder, a negative electrode, and a battery cell were manufactured in the same manner as in Example 1, with a difference that a phenol novolac-based dry binder (EPICLON N-770 made by DIC) alone was used to prepare the dry binder, and the thickness of the negative electrode active material layer was changed to 100 µm.

### Comparative Example 3

A negative electrode and a battery cell were manufactured in the same manner as in Example 1, with a difference that Elastollan^{®} 11 made by BASF as a polyurethane-based polymer including an ether group-containing structural unit and phenol novolac-based crosslinking agent (EPICLON N-770 made by DIC) in a weight ratio of 7:3 were mixed in NMP solvent to prepare a crosslinked wet binder, and the thickness of the negative electrode active material layer was changed to 220 µm.

### Comparative Example 4-1

A negative electrode and a battery cell were manufactured in the same manner as in Example 1, with a difference that a PTFE binder (DF 681F made by Syensqo), which was a dry binder, was used, and the thickness of the negative electrode active material layer was changed to 220 µm.

### Comparative Example 4-2

A negative electrode and a battery cell were manufactured in the same manner as in Comparative Example 4-1, with a difference that the negative electrode active material layer was compressed with a copper current collector in which an adhesive primer layer consisting of a PVDF binder and carbon black (Spuer P made by Timcal) as a conductive material was additionally formed.

### Evaluation Example 1: Tensile Strength and Adhesive Strength

The sheet-shaped negative electrode active material layers according to Examples 1 to 8 and Comparative Examples 1 to 4-1 were measured with respect to tensile strength by a universal testing machine (UTM) tensile strength tester, and the results are shown in Table 1 below.

Evaluation criteria:
When the tensile strength was greater than 1.5 N, ⊚ was given, when the tensile strength was in a range of greater than 1.0 N and less than or equal to 1.5 N, ∘ was given, and when the tensile strength was less than or equal 1.0 N, X was given.

Subsequently, the negative electrodes according to Examples 1 to Example 8 and Comparative Examples 1 to 4-1 were respectively measured with respect to adhesive strength between current collector and negative electrode active material layer by using the UTM tensile strength tester. Herein, each sample was prepared by attaching a slide glass to one side of a double-sided adhesive tape and then attaching each of the negative electrodes to the other side of the double-sided adhesive tape. The sample was mounted on the UTM tensile strength tester to measure adhesive strength by peeling the negative electrode form the slide glass to a peeling angle of 180 °, and the results are shown in Table 1 below.

Evaluation criteria:

When the measurement was 0.8 gf/mm or less, X was given, when greater than 0.8 gf/mm and less than or equal to 1.0 gf/mm, ∘ was given, and when greater than 1.0 gf/mm, ⊚ was given.

**Table 1:**

| | Mechanical characteristics | |
|---|---|---|
| | Tensile strength | Adhesive strength |
| Example1 | ○ | ○ |
| Example2 | ○ | ○ |
| Example3 | ⊚ | ○ |
| Example4 | ⊚ | ⊚ |
| Example5 | ⊚ | ⊚ |
| Example6 | ○ | ⊚ |
| Example7 | ○ | ⊚ |
| Example8 | ⊚ | ⊚ |
| Comparative Example1 | X | X |
| Comparative Example2 | - | - |
| Comparative Example3 | ○ | ○ |
| Comparative Example4-1 | ⊚ | X |

Referring to Table 1, Comparative Example 1, which used a binder including not an epoxy crosslinking agent but a polyurethane-based polymer alone, exhibited deteriorated tensile strength and adhesive strength. In Comparative Example 2 using the epoxy crosslinking agent alone as a binder, flexibility of an electrode plate was lowered, causing cracks and making it difficult to form an electrode, which resultantly made it impossible to measure the tensile strength and adhesive strength. Comparative Example 3, in which a wet process was performed by adding a polyurethane-based polymer and an epoxy crosslinking agent were added to a solvent, exhibited slightly deteriorated tensile strength and adhesive strength. Comparative Example 4-1, which used a PTFE binder, exhibited deteriorated adhesive strength.

On the contrary, Examples 1 to 8, which used a mixed binder of the polyurethane-based polymer and the epoxy crosslinking agent, exhibited improved adhesive strength and tensile strength through a crosslinking reaction between the polyurethane-based polymer and the epoxy crosslinking agent.

### Evaluation Example 2: Evaluation of Storage Stability of Binder

The binders in a powder state according to Examples 1 to 8 and Comparative Examples 1, 2, and 4-1, compared with the slurry of Comparative Example 3, were respectively mixed in a Thinky mixer at 2000 rpm to evaluate whether or not an electrode was passible to form immediately after the mixing and after 3 days, and the storage stability results are shown in Table 2 below.

Evaluation criteria:
When an electrode was possible to form, O was given, but when the electrode was not possible to form, X was given.

**Table 2:**

| | Immediately after mixing | After 3 days | Storage stability |
|---|---|---|---|
| Example 1 | ○ | ○ | ○ |
| Example 2 | ○ | ○ | ○ |
| Example 3 | ○ | ○ | ○ |
| Example 4 | ○ | ○ | ○ |
| Example 5 | ○ | ○ | ○ |
| Example 6 | ○ | ○ | ○ |
| Example 7 | ○ | ○ | ○ |
| Example 8 | ○ | ○ | ○ |
| Comparative Example 1 | ○ | ○ | ○ |
| Comparative Example 2 | X | X | - |
| Comparative Example 3 | ○ | X | X |
| Comparative Example 4-1 | ○ | ○ | ○ |

Referring to Table 2, for Examples 1 to 8, it was possible to form electrodes immediately after mixing, or after 3 days. However, in Comparative Example 2, which used the epoxy crosslinking agent alone, flexibility of an electrode plate was low, causing cracks and making it difficult to form an electrode. In Comparative Example 3, it was possible to form an electrode immediately after the mixing, but after 3 days of the mixing, it was impossible to form an electrode due to sharply increased viscosity. Accordingly, for the long-term storage of a mixture containing the epoxy crosslinking agent, the dry binders using powder mixing were advantageous.

### Evaluation Example 3: Electrolyte Solution Stability

Electrolyte solution stability was measured by dipping the negative electrodes of Examples 1 to 8 and Comparative Examples 1 to 4-2 in an electrolyte solution to examine whether peeling-off occurred or not after 3 days at 60 °C, and the results are shown in Table 3 below.

Evaluation criteria:
The electrolyte solution stability was evaluated by giving X to the peeling-off, which was used as criteria. Even when the peeling-off was not observed, but when pushed by hand after the evaluation, O was given. When neither peeling-off nor pushed, ⊚ was given.

**Table 3:**

| | Electrolyte solution stability |
|---|---|
| Example1 | ○ |
| Example2 | ○ |
| Example3 | ⊚ |
| Example4 | ⊚ |
| Example5 | ⊚ |
| Example6 | ⊚ |
| Example7 | ⊚ |
| Example8 | ⊚ |
| Comparative Example1 | X |
| Comparative Example3 | ○ |
| Comparative Example4-2 | ○ |

Referring to Table 3, when the polyurethane-based polymer of Comparative Example 1 alone was used as a binder, electrolyte stability was deteriorated. In Examples 1 to 8, swelling characteristics were reduced by the epoxy crosslinking agent, thereby improving electrolyte solution safety.

### Evaluation Example 4: Current Density and Initial Charge/discharge Efficiency

The half-cells of Examples 1 to 8 and Comparative Examples 1 to 4-2 were constant current-charged to a voltage of 4.25 V at a current rate of 0.5 C, and cut off in the constant voltage mode of 4.25 V at a current rate of 0.02 C. Subsequently, the cells were discharged to a voltage of 2.8 V at a constant current of 0.5 C.

Evaluation criteria:
If the current density was 4 mA/cm² or less, X was given, if greater than 4 mA/cm² and less than or equal to 5 mA/cm², ∘ was given, and if greater than 5 mA/cm², ⊚ was given.
If the initial charge/discharge efficiency was 90% or higher, ⊚ was given, if the initial charge/discharge efficiency was greater than or equal to 87% and lower than 90%, o was given, if the initial charge/discharge efficiency was greater than or equal to 84% and lower than 87%, △ was given, and if the initial charge/discharge efficiency was lower than 84%, X was given.

**Table 4:**

| | Current density | Initial charge/discharge efficiency |
|---|---|---|
| Example 1 | ⊚ | ⊚ |
| Example 2 | ⊚ | ⊚ |
| Example 3 | ⊚ | ⊚ |
| Example 4 | ○ | ⊚ |
| Example 5 | ○ | ⊚ |
| Example 6 | ○ | ⊚ |
| Example 7 | ○ | ⊚ |
| Example 8 | ○ | ⊚ |
| Comparative Example 1 | ○ | ○ |
| Comparative Example 3 | X | ○ |
| Comparative Example 4-2 | ⊚ | X |

Referring to Table 4 above, the half-cells of Examples 1 to 8, in which the negative electrode had relatively high permittivity, exhibited high current density and initial charge/discharge efficiency.

In comparison, in the half-cells of Comparative Example 1 having no crosslinking agent and the half-cells of Comparative Example 3 including the wet binder, a clumping phenomenon occurred resulting in high resistance. This led to reduced battery performance, with low current density and initial charge/discharge efficiency. Additionally, the half-cells of Comparative Example 4-2 exhibited high current density but low initial charge/discharge efficiency due to low reduction stability of the negative electrode.

While this disclosure has been described in connection with what is presently considered to be practical example embodiments, it is to be understood that the disclosure is not limited to the disclosed example embodiments. On the contrary, the disclosure is intended to cover various modifications and equivalent arrangements included within the spirit and scope of the appended claims.

**Description of Symbols:**

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

1. A dry binder, comprising:
a crosslinking reaction product in which a polyurethane-based polymer is crosslinked by an epoxy crosslinking agent.

2. The dry binder as claimed in claim 1, wherein the polyurethane-based polymer is included in an amount in a range of from about 60 parts by weight to about 95 parts by weight, based on 100 parts by weight of the dry binder.

3. The dry binder as claimed in claim 1 or 2, wherein the epoxy crosslinking agent is included in an amount in a range of from about 5 parts by weight to about 40 parts by weight, based on 100 parts by weight of the dry binder.

4. The dry binder as claimed in any one of claims 1 to 3, wherein the polyurethane-based polymer comprises a structural unit represented by Chemical Formula 1: 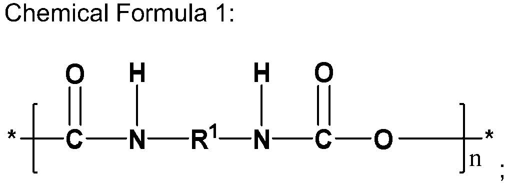
wherein, in Chemical Formula 1,
R¹ comprises a linking group which is independently at least one of a substituted or unsubstituted C1 to C20 alkylene group, a substituted or unsubstituted C3 to C20 cycloalkylene group, and a combination thereof,
n is an integer in a range of 1 to about 300, and
* represents a linking site with a main chain.

5. The dry binder as claimed in any one of claims 1 to 4, wherein the polyurethane-based polymer comprises at least one of the structural units represented by Chemical Formula 1-1, Chemical Formula 1-2, and Chemical Formula 1-3: 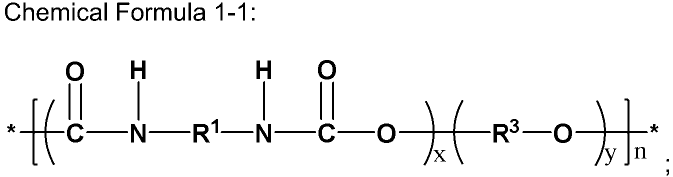 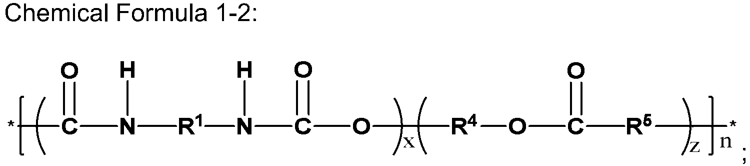 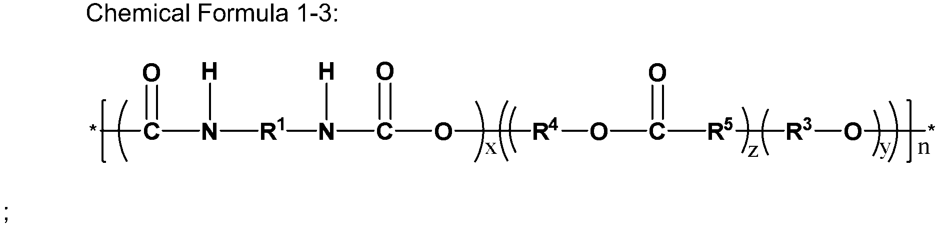 wherein, in Chemical Formula 1-1, Chemical Formula 1-2, and Chemical Formula 1-3:
R¹, R³, R⁴, and R⁵ each independently comprise linking groups comprising at least one of a substituted or unsubstituted C1 to C20 alkylene group, a substituted or unsubstituted C3 to C20 cycloalkylene group, and a combination thereof,
x, y, and z are mole fractions of each structural unit and are each independently in a range of 0 to 1,
n is an integer in a range of 1 to about 200, and
* represents a linking site with a main chain.

6. The dry binder as claimed in claim 5, wherein the substituted or unsubstituted C1 to C20 alkylene group comprises a structural unit of -(CH₂)ₙ-, where n is an integer in a range of 1 to 14.

7. The dry binder as claimed in claim 6, wherein at least one non-adjacent methylene group (-(CH₂)-) among the substituted or unsubstituted C1 to C20 alkylene groups is replaced with at least one of -NH-, -C(=O)-, and a combination thereof.

8. The dry binder as claimed in any one of claims 1 to 7, wherein the epoxy crosslinking agent comprises at least one of compounds represented by Chemical Formulas 2-1, 2-2, 2-3, 2-4, and 2-5: 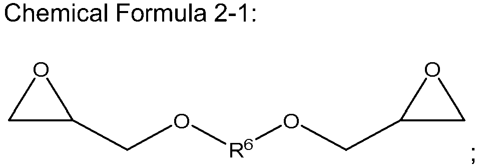 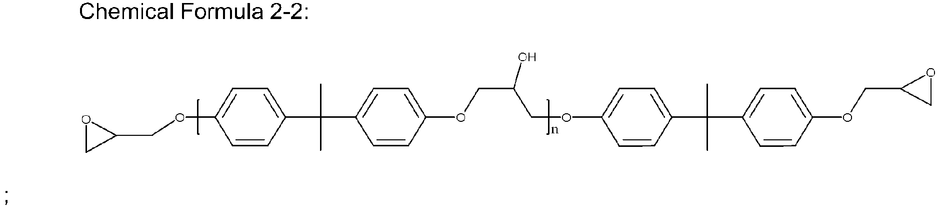 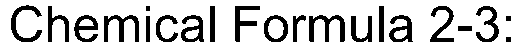 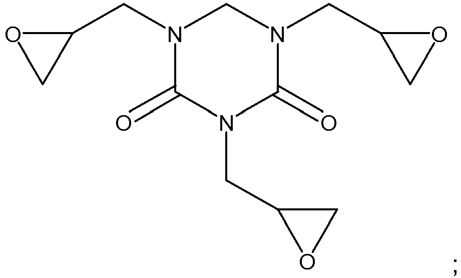 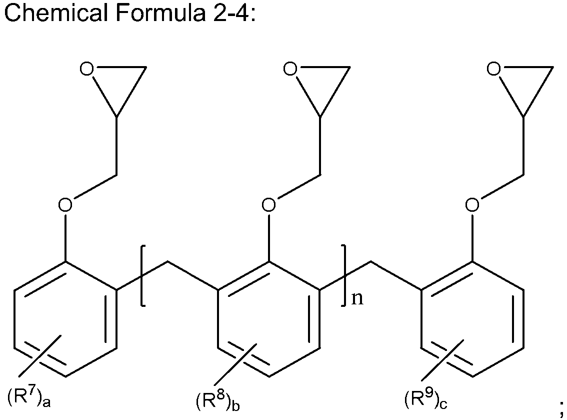 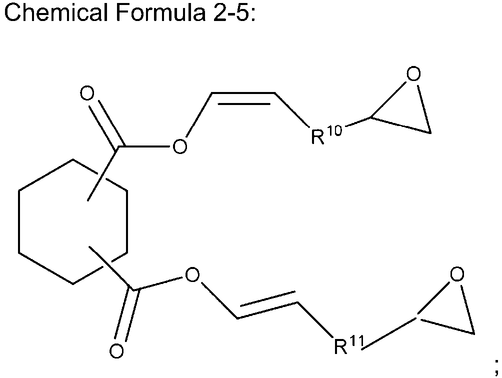
wherein, in Chemical Formulas 2-1, 2-2, 2-3, 2-4 and 2-5,
R⁶, R¹⁰, and R¹¹ each independently comprises a substituted or unsubstituted C1 to C6 alkylene group, R⁷, R⁸, and R⁹ are the same or different and each independently comprises hydrogen (H), deuterium, or a substituted or unsubstituted C1 to C6 alkyl group, n is an integer greater than or equal to 1 and less than or equal to 30, and a, b, and c are each independently an integer greater than or equal to 0 and less than or equal to 4.

9. The dry binder as claimed in any one of claims 1 to 8, wherein a weight average molecular weight (Mw) of the polyurethane-based polymer is in a range of from about 600 g/mol to about 800,000 g/mol; and/or wherein a weight average molecular weight (Mw) of the epoxy crosslinking agent is in a range of about 170 g/mol to about 6,000 g/mol.

10. An electrode for a rechargeable lithium battery, the electrode comprising:
the dry binder as claimed in any one of claims 1 to 9; and
an electrode active material.

11. The electrode as claimed in claim 10, wherein the dry binder is included in an amount in a range of from about 0.5 parts by weight to about 20 parts by weight, based on 100 parts by weight of the electrode active material.

12. The electrode as claimed in claim 10 or 11, wherein the electrode is a negative electrode; optionally, wherein the negative electrode comprises a negative electrode active material comprising at least one of a carbon-based negative electrode active material, a silicon-based negative electrode active material, and a combination thereof.

13. The electrode as claimed in claim 10 or 11, wherein the electrode is a positive electrode.

14. A rechargeable lithium battery, comprising:
a positive electrode;
a negative electrode; and
an electrolyte,
wherein at least one of the negative electrode and the positive electrode comprises the dry binder as claimed in any one of claims 1 to 9.

15. A method for manufacturing an electrode, the method comprising:
mixing an electrode active material, a binder, and a conductive material in a dry manner to prepare a composition for forming an electrode, and
coating the composition for forming the electrode on an electrode current collector to form an electrode,
wherein the binder comprises a crosslinking reaction product in which a polyurethane-based polymer is crosslinked by an epoxy crosslinking agent; and, optionally, wherein the electrode is formed by a calendaring process.
